# EUROPÄISCHE PATENTSCHRIFT

(11) **EP 3 673 570 B1**
(45) Veröffentlichungstag und Bekanntmachung des Hinweises auf die Patenterteilung: **21.12.2022**
(21) Anmeldenummer: 18765352.2
(22) Anmeldetag: 03.08.2018
(51) Int. Cl.: H02K 15/04

(54) **FERTIGUNGSANLAGE ZUM HERSTELLEN EINES WICKLUNGSSTABES FÜR EINEN ELEKTROMOTOR, SOWIE VERFAHREN ZUM HERSTELLEN DES WICKLUNGSSTABES**
MANUFACTURING INSTALLATION FOR PRODUCING A WINDING BAR FOR AN ELECTRIC MOTOR, AND METHOD FOR PRODUCING THE WINDING BAR
SYSTÈME DE PRÉPARATION DESTINÉ À FABRIQUER UNE TIGE D'ENROULEMENT POUR UN MOTEUR ÉLECTRIQUE, ET PROCÉDÉ DE FABRICATION D'UNE TIGE D'ENROULEMENT

(30) Priorität: 23.08.2017 AT 507042017
(43) Veröffentlichungstag der Anmeldung: 01.07.2020
(73) Patentinhaber: Miba Automation Systems Ges.m.b.H., 4663 Laakirchen (AT)
(72) Erfinder: FALKNER, Andreas, 4600 Wels (AT); PRIMORAC, Mladen-Mateo, 3100 St. Pölten (AT); SCHERRER, David, 4813 Altmünster (AT)
(74) Vertreter: Burger, Hannes
(86) Internationale Anmeldenummer: PCT/AT2018/060174
(87) Internationale Veröffentlichungsnummer: WO 2019/036736

(56) Entgegenhaltungen:
- EP-A1- 3 021 467
- US-A1- 2015 052 736

## Beschreibung

Die Erfindung betrifft eine Fertigungsanlage zum Herstellen eines Wicklungsstabes für einen Elektromotor, wobei die Fertigungsanlage zum Verarbeiten eines Wicklungsstabrohlings ausgebildet ist, sowie ein Verfahren zum Herstellen eines Wicklungsstabes für einen Elektromotor.

Aus der DE 10 2015 217 922 A1 sind Wicklungsstäbe bekannt, die in ein Blechpaket eines Elektromotors eingeschoben sind. Mehrere Wicklungsstäbe bilden im elektrisch miteinander verbundenen Zustand eine Wicklung des Elektromotors. Die Wicklungsstäbe sind stabförmig ausgebildet und werden an deren Enden elektrisch leitend miteinander verbunden, um die Wicklung zu bilden. Außerdem weisen die einzelnen Wicklungsstäbe eine umhüllende Isolierungsschicht auf. Aus dem Stand der Technik ist bekannt diese Isolierungsschicht mittels eines Lases teilweise wegzubrennen.

Die US 2015/0052736 A1 offenbart eine Bearbeitungsanlage zum mechanischen Abisolieren von Wicklungsstäben.

Das aus dem Stand der Technik bekannte Verfahren zum Entfernen der Isolierungsschicht vom Wicklungsstabrohling bzw. vom Wicklungsstab weist den Nachteil auf, dass dieses Zeitaufwendig ist und mit hohen Investitionskosten verbunden ist.

Aufgabe der vorliegenden Erfindung war es, die Nachteile des Standes der Technik zu überwinden und eine Vorrichtung und ein Verfahren zur Verfügung zu stellen, mittels welchem Wicklungsstäbe in einer kurzen Taktzeit erzeugt werden können.

Diese Aufgabe wird durch eine Vorrichtung und ein Verfahren gemäß den Ansprüchen gelöst.

Erfindungsgemäß ist eine Fertigungsanlage gemäß dem Anspruch 1 zum Herstellen eines Wicklungsstabes für einen

Elektromotor ausgebildet, wobei die Fertigungsanlage zum Verarbeiten eines Wicklungsstabrohlings ausgebildet ist, welcher einen Kern aus einem elektrisch leiten Material und eine den Kern umhüllende Isolierschicht aufweist, die Fertigungsanlage umfassend:
- eine Abisoliervorrichtung welche zum teilweisen Entfernen der Isolierschicht an einer Grundfläche und einer Deckfläche des Wicklungsstabrohlings ausgebildet ist, wobei der Wicklungsstabrohling in Produktionsrichtung durch die Abisoliervorrichtung führbar ist. Die Abisoliervorrichtung weist ein Bearbeitungswerkzeug zum mechanischen Abtrag der Isolierschicht des Wicklungsstabrohlings auf.

Von Vorteil an der erfindungsgemäßen Fertigungsanlage ist, dass das Bearbeitungswerkzeug zum mechanischen Abtrag der Isolierschicht eine im Vergleich zu herkömmlichen Verfahren große Bearbeitungsgeschwindigkeit aufweisen kann. Dadurch kann die Taktzeit beim Herstellen der Wicklungsstäbe möglichst kurz gehalten werden.

Weiters kann es zweckmäßig sein, das Bearbeitungswerkzeug der Abisoliervorrichtung zumindest einen Bearbeitungskopf aufweist, an welchem eine geometrisch bestimmte Schneide ausgebildet ist. Von Vorteil ist hierbei, dass durch die geometrisch bestimmte Schneide ein mechanischer Abtrag der Isolationsschicht erfolgen kann. Die geometrisch bestimmte Schneide wird hierbei relativ zum Wicklungsstabrohling bewegt.

In einem weiteren Ausführungsbeispiel kann vorgesehen sein, dass an der Abisoliervorrichtung nicht nur die Grundfläche und die Deckfläche abisoliert werden, sondern auch die Seitenflächen. Beispielsweise kann vorgesehen sein, dass zwei weitere Bearbeitungswerkzeuge ausgebildet sind, die im Winkel von 90° versetzt zu den bereits beschriebenen Bearbeitungswerkzeugen angeordnet sind und somit auf die Seitenflächen wirken. Grundsätzlich können die weiteren Bearbeitungswerkzeuge einen ähnlichen Aufbau aufweisen, wie die bereits beschriebenen Bearbeitungswerkzeuge. Mittels der weiteren Bearbeitungswerkzeuge kann die Isolierschicht am kompletten Umfang des Wicklungsstabrohlings entfernt werden.

Darüber hinaus kann vorgesehen sein, dass die weiteren Bearbeitungswerkzeuge in einer weiteren Abisoliervorrichtung angeordnet sind, welche der bereits beschriebenen Abisoliervorrichtung vor- oder nachgeschalten ist.

Erfindungsgemäß ist vorgesehen, dass in einer ersten Abisoliervorrichtung die Grundfläche und die Deckfläche abisoliert werden und in einer weiteren Abisoliervorrichtung die Seitenflächen abisoliert werden.

Ferner kann vorgesehen sein, dass der Bearbeitungskopf des Bearbeitungswerkzeuges der Abisoliervorrichtung in Form eines Räumwerkzeuges ausgebildet ist, welches eine Bearbeitungsrichtung quer zur Produktionsrichtung aufweist, wobei in Bearbeitungsrichtung wirkend zumindest eine Schneide, insbesondere mehrere in Bearbeitungsrichtung hintereinander angeordnete Schneiden, ausgebildet sind. Ein derartiges Räumwerkzeug weist einen möglichst einfachen Aufbau auf und kann durch eine lineare Bewegung in Bearbeitungsrichtung die Isolierschicht vom Wicklungsstabrohling abtrennen. Insbesondere mehrere hintereinander angeordnete Schneiden können dazu dienen, dass die Isolierschicht in einem Bearbeitungsvorgang jedoch in mehreren Stufen abgetragen wird. Die einzelnen hintereinander angeordneten Schneiden können hierbei eine unterschiedliche Bearbeitungstiefe aufweisen, sodass die komplette abzutragende Dicke auf die einzelnen Schneiden aufgeteilt wird.

Darüber hinaus kann vorgesehen sein, dass das Bearbeitungswerkzeug der Abisoliervorrichtung einen ersten Bearbeitungskopf mit ersten Schneiden aufweist und einen zweiten Bearbeitungskopf mit zweiten Schneiden aufweist, wobei die ersten Schneiden und die zweiten Schneiden eine gegensinnige Bearbeitungsrichtung aufweisen und wobei der erste Bearbeitungskopf und der zweite Bearbeitungskopf selektiv aktivierbar sind. Von Vorteil ist hierbei, dass durch diese Maßnahme das Bearbeitungswerkzeug nicht nur in einer ersten Bearbeitungsrichtung die Isolierschicht abtragen kann, sondern auch in einer zweiten Bearbeitungsrichtung die Isolierschicht abtragen kann. Dadurch kann die Taktzeit weiter verkürzt werden, da nach Beendigung des Bearbeitungsvorganges in der ersten Bearbeitungsrichtung der erste Bearbeitungskopf deaktiviert und der zweite Bearbeitungskopf aktiviert werden kann. Dadurch kann das Bearbeitungswerkzeug unmittelbar nach dem Bearbeitungsvorgang in der ersten Bearbeitungsrichtung einen Bearbeitungsvorgang in der zweiten entgegengesetzten Bearbeitungsrichtung durchführen. Somit braucht das Bearbeitungswerkzeug nach dem Bearbeitungsvorgang nicht in eine Ausgangsposition zurückbewegt werden, sondern kann nach entsprechendem Vorschub des Wicklungsstabrohlings direkt einen weiteren Bearbeitungsvorgang starten.

Vorteilhaft ist auch eine Ausprägung, gemäß welcher vorgesehen sein kann, dass der erste Bearbeitungskopf mit einem ersten Pneumatikzylinder gekoppelt ist und der zweite Bearbeitungskopf mit einem zweiten Pneumatikzylinder gekoppelt ist, wobei die Bearbeitungsköpfe mittels den Pneumatikzylindern in einer Zustellrichtung verschiebar sind und dadurch selektiv aktivierbar sind. Von Vorteil ist hierbei, dass mittels der Pneumatikzylinder die Bearbeitungsköpfe einfach und schnell in Zustellrichtung bewegt werden können und dadurch die Taktzeit geringgehalten werden kann.

Weiters kann vorgesehen sein, dass für jeden der beiden Bearbeitungsköpfe ein Sperrmechanismus ausgebildet ist, wodurch der Bearbeitungskopf durch mechanische Verriegelung in seiner Bearbeitungsposition gehalten werden kann. Der Sperrmechanismus kann beispielsweise einen Keil umfassen, welcher mittels einem weiteren Pneumatikzylinder unter den Bearbeitungskopf eingeschoben werden kann und somit als mechanischer Anschlag für den Bearbeitungskopf dienen kann.

Gemäß einer Weiterbildung ist es möglich, dass die Schneiden V-Förmig ausgebildet sind. Von Vorteil ist hierbei, dass durch diese Maßnahme der von den Schneiden abgehobene Span während dem Bearbeitungsvorgang vom Zentrum der Schneiden nach außen transportiert wird und somit der Wirkbereich der Schneiden möglichst von Spanresten freigehalten wird.

Ferner kann es zweckmäßig sein, wenn das Bearbeitungswerkzeug eine Niederhalterschiene aufweist, welche mittig der Schneiden angeordnet ist und eine Gleitoberfläche aufweist. Von Vorteil ist herbei, dass durch die Niederhaltschiene der Wicklungsstabrohling während dem Bearbeitungsvorgang in seiner Position gehalten werden kann. Dadurch wird das Drehmoment das durch den Bearbeitungsvorgang in den Wicklungsstabrohling eingeleitet wird abgefangen.

Darüber hinaus kann vorgesehen sein, dass die Abisoliervorrichtung einen oberen Werkzeugschlitten zur Aufnahme eines oberen Bearbeitungswerkzeuges und einen unteren Werkzeugschlitten zur Aufnahme eines unteren Bearbeitungswerkzeuges aufweist, wobei die beiden Werkzeugschlitten mittels einer Linearführung quer zur Produktionsrichtung geführt sind. Durch den Einsatz eines oberen Werkzeugschlittens und eines unteren Werkzeugschlittens können die Grundfläche und die Deckfläche des Wicklungsstabrohlings gleichzeitig bearbeitet werden. Somit kann in nur einem Bearbeitungsschritt sowohl die Grundfläche als auch die Deckfläche des Wicklungsstabrohlings abisoliert werden. Der untere Werkzeugschlitten und somit das untere Bearbeitungswerkzeug und der obere Werkzeugschlitten und somit das obere Bearbeitungswerkzeug können grundsätzlich einen ähnlichen Aufbau aufweisen. Mittels dem oberen Werkzeugschlitten bzw. mittels dem unteren Werkzeugschlitten können die Bearbeitungswerkzeuge in Bearbeitungsrichtung geführt bzw. bewegt werden. Insbesondere kann vorgesehen sein, dass der untere Werkzeugschlitten und der obere Werkzeugschlitten gegengleich zueinander arbeiten und daher eine gegengerichtete Kraft auf den Wicklungsstabrohling aufbringen.

Weiters kann vorgesehen sein, dass die Abisoliervorrichtung einen Antriebsmotor aufweist, der zum Antrieb des oberen Werkzeugschlittens und des untern Werkzeugschlittens dient, wobei der obere Werkzeugschlitten eine obere Zahnstange aufweist und der untere Werkzeugschlitten eine untere Zahnstange aufweist und wobei beide Zahnstangen mit einem Zahnrad in Eingriff stehen, welches mit dem Antriebsmotor drehgekoppelt ist, wobei die beiden Werkzeugschlitten derart mit dem Zahnrad gekoppelt sind, dass bei Drehung des Zahnrades die beiden Werkzeugschlitten in gegensinniger Richtung zueinander bewegt werden. Von Vorteil ist herbei, dass die Werkzeugschlitten mittels dem Antriebsmotor und der Zahnrad-Zahnstangen-Kombination positionsgenau in Bearbeitungsrichtung bewegt werden können. Durch Positionieren der unteren Zahnstange unterhalb des Zahnrades und der oberen Zahnstange oberhalb des Zahnrades kann erreicht werden, dass bei Drehung des Zahnrades in einer ersten Drehrichtung die beiden Zahnstangen und somit auch die beiden mit den Zahnstangen gekoppelten Werkzeugschlitten in gegensinniger Richtung bewegt werden. Somit können beide Werkzeugschlitten mittels nur einem Antriebsmotor während dem Bearbeitungsvorgang bewegt werden. Die gegensinnige Bewegung der beiden Werkzeugschlitten hat den Vorteil, dass das Bearbeitungswerkzeug des unteren Werkzeugschlittens in einer ersten Bearbeitungsrichtung wirken kann und gleichzeitig das Bearbeitungswerkzeug des oberen Werkzeugschlittens in einer zweiten Bearbeitungsrichtung wirken kann, wodurch die durch die Bearbeitungswerkzeuge in den Wicklungsstabrohling eingeleiteten Kräfte in gegensinniger Richtung wirken. Die Kräfte quer zum Wicklungsstabrohling heben sich somit auf und es wird nur ein geringes Drehmoment in den Wicklungsstabrohling eingeleitet, das durch den Abstand der Schneiden des oberen Werkzeugschlittens und der Schneiden des unteren Werkzeugschlittens zueinander hervorgerufen wird.

In einer alternativen Ausführungsvariante kann vorgesehen sein, dass der Antriebsmotor mit einer Stellspindel gekoppelt ist, die zwei gegensinnige Steigungen aufweist, wobei der obere Werkzeugschlitten mit einer Spindelmutter gekoppelt ist, die in den Bereich der ersten Steigung eingreift und der untere Werkzeugschlitten mit einer Spindelmutter gekoppelt ist, die in den Bereich der zweiten Steigung eingreift.

In wieder einer anderen Ausführungsvariante kann auch vorgesehen sein, dass der Antriebsmotor mit einem Zahnriemen gekoppelt ist, wobei der obere Werkzeugschlitten mit einem ersten Abschnitt des Zahnriemens gekoppelt ist und der untere Werkzeugschlitten mit einem zweiten, rückläufigen Abschnitt des Zahnriemens gekoppelt ist.

Weiters kann vorgesehen sein, dass der Antriebsmotor durch einen Elektromotor, insbesondere durch einen Servomotor gebildet ist. Die Verwendung eines Servomotors weist den Vorteil auf, dass die Bearbeitungswerkzeuge schnell und einfach bewegt werden können und dabei hohe Kräfte aufbringen können und die Endpositionen trotzdem mit hoher Genauigkeit angefahren werden können.

Darüber hinaus kann vorgesehen sein, dass zwischen dem Antriebsmotor und dem Zahnrad ein Getriebe angeordnet ist. Insbesondere kann vorgesehen sein, dass das Getriebe ein Winkelgetriebe ist.

In einer Weiterbildung kann vorgesehen sein, dass die Zahnstangen bzw. das Zahnrad eine Schrägverzahnung aufweisen. Durch Verwendung einer Schrägverzahnung kann das Spiel in Bearbeitungsrichtung der Zahnstangen möglichst gering gehalten werden, wodurch bei der alternierenden Bewegung der Zahnstangen die Geräuschemission möglichst gering gehalten werden kann. Darüber hinaus kann durch die Verwendung der Schrägverzahnung der Verschleiß an den einzelnen Zähnen gering gehalten werden, wodurch das Zahnrad bzw. die Zahnstangen eine hohe Lebensdauer aufweisen können.

Erfindungsgemäß ist vorgesehen, dass eine Ablängvorrichtung zum Ablängen des Wicklungsstabrohlings ausgebildet ist, wobei die Ablängvorrichtung der Abisoliervorrichtung in Produktionsrichtung nachgeschalten ist, insbesondere dass die Ablängvorrichtung ein Stanzwerkzeug aufweist. Von Vorteil ist hierbei, dass mittels dem Stanzwerkzeug die einzelnen Wicklungsstäbe aus dem Wicklungsstabrohling abgelängt werden können.

Erfindungsgemäß ist weiterhin vorgesehen, dass die Ablängvorrichtung gleichzeitig zum Abisolieren von Teilbereichen von Seitenflächen des Wicklungsstabrohlings dient. Vorteilhaft kann vorgesehen sein, dass das Stanzwerkzeug H-förmig ausgebildet ist, sodass der Wicklungsstabrohling in dessen Längsrichtung nicht nur abgetrennt werden kann, sondern dass gleichzeitig Teilbereiche der Seitenflächen des Wicklungsstabrohlings mittels dem Stanzwerkzeug abisoliert werden können.

Insbesondere kann vorgesehen sein, dass der Abstand zwischen dem Bearbeitungswerkzeug der Abisoliervorrichtung und dem Stanzwerkzeug dem Vielfachen einer Stablänge entspricht, sodass die Bearbeitungsschritte des Stanzens und des Abisolierens zeitgleich durchgeführt werden können. Dies bring den Vorteil mit sich, dass der Zeitraum in dem der Wicklungsstabrohling für den Bearbeitungsvorgang des Abisolierens und des Stanzens angehalten werden muss, möglichst gering gehalten werden kann.

Entsprechend einer vorteilhaften Weiterbildung kann vorgesehen sein, dass zwischen der Abisoliervorrichtung und der Ablängvorrichtung eine Vorschubvorrichtung ausgebildet ist. Mittels der Vorschubvorrichtung kann der Wicklungsstabrohling, der Abisoliervorrichtung der Stanzvorrichtung getaktet zugeführt werden. Insbesondere kann vorgesehen sein, dass die Vorschubvorrichtung zwei einander gegenüberliegende Klemmbänder aufweist, zwischen welchen der Wicklungsstabrohling geführt bzw. geklemmt ist. Die beiden Klemmbänder können jeweils um Umlenkrollen geführt sein.

Insbesondere kann es vorteilhaft sein, wenn zwischen der Abisoliervorrichtung und der Ablängvorrichtung eine Messrollenanordnung ausgebildet ist. Durch die Messrollenanordnung kann der tatsächlich durchgeführte Vorschub des Wicklungsstabrohlings in Produktionsrichtung eruiert werden und somit die Genauigkeit der Ablängung des Wicklungsstabrohlings verbessert werden.

Insbesondere kann vorgesehen sein, dass die Messrollenanordnung zwei einander gegenüberliegende Rollen aufweist, wobei eine erste Rolle als Gegenhalterolle und die zweite Rolle als Messrolle wirken kann. Insbesondere kann vorgesehen sein, dass die Messrolle eine gummierte Oberfläche aufweist.

Ferner kann vorgesehen sein, dass eine Richtrollenanordnung zum Ausrichten des Wicklungsstabrohlings ausgebildet ist, wobei in Produktionsrichtung gesehen die Richtrollenanordnung der Abisoliervorrichtung vorgeschalten ist. Von Vorteil ist hierbei, dass durch die Richtrollenanordnung der Wicklungsstabrohling vor dem Einführen in die Abisoliervorrichtung ausgerichtet werden kann. Somit können etwaige Deformationen des Wicklungsstabrohlings in der Richtrollenanordnung geradegebogen werden.

Darüber hinaus kann vorgesehen sein, dass eine Pufferstrecke für den Wicklungsstabrohling ausgebildet ist, wobei in Produktionsrichtung gesehen die Pufferstrecke der Abisoliervorrichtung vorgeschalten ist. Von Vorteil ist hierbei, dass durch diese Maßnahme der Wicklungsstabrohling mittels der Zuführvorrichtung kontinuierlich der Fertigungsanlage zugeführt werden kann und in der Abisoliervorrichtung bzw. Ablängvorrichtung getaktet bearbeitet werden kann. Durch das kontinuierliche Zuführen des Wicklungsstabrohlings kann dieser auch kontinuierlich von einer Rohmaterialrolle abgezogen werden. Somit muss diese nicht ständig beschleunigt und wieder abgebremst werden.

Vorteilhaft ist auch eine Ausprägung, gemäß welcher vorgesehen sein kann, dass die Abisoliervorrichtung und/oder die Ablängvorrichtung an einer Linearführung angeordnet ist, mittels welcher die Abisoliervorrichtung und/oder die Ablängvorrichtung in einer zur Produktionsrichtung parallelen Verstellrichtung verschiebbar ist. Dadurch kann der Abstand zwischen der Abisoliervorrichtung und der Ablängvorrichtung variiert werden, wodurch bei der Herstellung unterschiedlich langer Wicklungsstäbe die gemeinsame Taktung der Abisoliervorrichtung und der Ablängvorrichtung beibehalten werden kann.

Weiters kann vorgesehen sein, dass eine Walzanlage ausgebildet ist, mittels der die Querschnittsform des Wicklungsstabrohlings veränderbar ist. Insbesondere kann vorgesehen sein, dass die Querschnittsform des Wicklungsstabrohlings mitsamt der Isolierung verändert wird. Beispielsweise ist es möglich den Querschnitt von rund auf rechteckig, von rund auf quadratisch, von quadratisch auf rechteckig, von rechteckig auf quadratisch zu ändern.

Weiters kann vorgesehen sein, dass eine Prägvorrichtung ausgebildet ist, mittels welcher der Querschnitt des Wicklungsstabrohlings in einem bereits abisolierten Bereich lokal verändert werden kann. Insbesondere kann vorgesehen sein, dass die Prägevorrichtung in Produktionsrichtung nachfolgend an die Abisoliervorrichtung angeordnet ist und eine Vertiefung in den Querschnitt des Wicklungsstabrohlings einbringt.

Erfindungsgemäß ist ein Verfahren gemäß Anspruch 11 zum Herstellen eines Wicklungsstabes für einen Elektromotor, insbesondere unter Verwendung einer obig beschriebenen Fertigungsanlage vorgesehen. Das Verfahren weist die folgenden Verfahrensschritte auf:
- Bereitstellen eines Wicklungsstabrohlings mit einem Kern aus einem elektrisch leiten Material und einer den Kern umhüllenden Isolierschicht;
- Zuführen des Wicklungsstabrohlings zu einer Abisoliervorrichtung in Produktionsrichtung;
- Entfernen eines Teilbereiches der Isolierschicht an einer Grundfläche und einer Deckfläche des Wicklungsstabrohlings mittels der Abisoliervorrichtung, wobei die Isolierschicht durch mechanische Bearbeitung vom Wicklungsstabrohling abgetragen wird.

Von Vorteil am erfindungsgemäßen Verfahren ist, dass das Bearbeitungswerkzeug zum mechanischen Abtrag der Isolierschicht eine im Vergleich zu herkömmlichen Verfahren große Bearbeitungsgeschwindigkeit aufweisen kann. Dadurch kann die Taktzeit beim Herstellen der Wicklungsstäbe möglichst kurz gehalten werden.

Erfindungsgemäß ist vorgesehen, dass nach dem Entfernen eines Teilbereiches der Isolierschicht die Produktionsschritte
- Zuführen des Wicklungsstabrohlings zu einer Ablängvorrichtung;
- Ablängen des Wicklungsstabrohlings an der Ablängvorrichtung und damit Herstellen von Wicklungsstäben;
ausgeführt werden. Von Vorteil ist herbei, dass die Wicklungsstäbe in einem Produktionsvorgang fertiggestellt werden können.

Darüber hinaus kann vorgesehen sein, dass der teilweise abisolierte Wicklungsstabrohling mittels einer Vorschubvorrichtung getaktet der Ablängvorrichtung zugeführt wird, wobei der Ablängvorgang und der Abisoliervorgang zeitgleich durchgeführt werden. Dadurch kann die Bearbeitungszeit verkürzt werden.

Erfindungsgemäß ist weiterhin vorgesehen, dass die Ablängvorrichtung gleichzeitig zum Abisolieren von Teilbereichen von Seitenflächendes Wicklungsstabrohlings dient. Beispielsweise kann vorgesehen sein, dass zum Herstellen von Wicklungsstäben mit unterschiedlichen Stablängen die Abisoliervorrichtung in Produktionsrichtung relativ zur Ablängvorrichtung verstellt wird. Durch diese Maßnahme kann sichergestellt werden, dass die Produktionsschritte ablängen und abisolieren immer zeitgleich durchgeführt werden können.

Gemäß einer besonderen Ausprägung ist es möglich, dass der Wicklungsstabrohling mittels einer Zuführvorrichtung kontinuierlich der Fertigungsanlage zugeführt wird und in einer Pufferstrecke, insbesondere in einer Materialschlaufe, zwischengespeichert wird, sodass der Wicklungsstabrohling in der Abisoliervorrichtung getaktet bearbeitet werden kann.

In einer weiteren Ausführungsvariante kann auch vorgesehen sein, dass der komplette Bearbeitungsprozess zum Herstellen von Wicklungsstäben aus einem Wicklungsstabrohling in einem kontinuierlichen Fertigungsvorgang erfolgt. Hierbei können für das Abisolieren und/oder für das Ablängen der Wicklungsstäbe rotationswerkzeuge, insbesondere Rotationsstanzen, verwendet werden.

In wieder einem anderen Ausführungsbeispiel kann auch vorgesehen sein, dass der Wicklungsstabrohling während dem Entfernen eines Teilbereiches der Isolierschicht kontinuierlich in Produktionsrichtung bewegt wird und die Abisoliervorrichtung während dem Abisoliervorgang aufsynchronisiert mit dem Wicklungsstabrohling in Produktionsrichtung mitbewegt wird. Zusätzlich kann vorgesehen sein, dass der Wicklungsstabrohling während dem Ablängen des Wicklungsstabrohlings kontinuierlich in Produktionsrichtung bewegt wird und die Ablängvorrichtung während dem Ablängvorgang aufsynchronisiert mit dem Wicklungsstabrohling in Produktionsrichtung mitbewegt wird. Die Abisoliervorrichtung bzw. die Ablängvorrichtung müssen hierbei verschiebbar an der Fertigungsanlage angeordnet sein. Die hier beschriebene Ausführungsvariante weist den Vorteil auf, dass der Wicklungsstabrohling kontinuierlich vorgeschoben werden kann.

Ein Wicklungsstab ist ein Stab, der in dessen Kern ein leitfähiges Material aufweist, welches von einer Isolierungsschicht umgeben ist. Der Wicklungsstab weist einen im Wesentlichen rechteckigen oder Quadratischen Querschnitt auf, wobei an zwei einander gegenüberliegenden Seitenkanten eine Deckfläche und eine Grundfläche ausgebildet ist und an den beiden restlichen Seitenkanten Seitenflächen ausgebildet sind. Vorzugsweise ist vorgesehen, dass der Kern des Wicklungsstabes aus einem Kupfermaterial gebildet ist.

Ein Wicklungsstabrohling weist in dessen Kern ein leitfähiges Material auf, welches von einer Isolierungsschicht umgeben ist. Der Wicklungsstabrohling weist eine vielfache Länge eines Wicklungsstabes auf. Insbesondere kann vorgesehen sein, dass der Wicklungsstabrohling auf großen Rollen mit zig Metern Materiallänge bereitgestellt wird, oder dass der Wicklungsstabrohling direkt an der Fertigungsanlage endlosgefertigt wird.

Die Bearbeitungsrichtung der ersten Schneide und die Bearbeitungsrichtung der zweiten Schneide sind gegensinnig zueinander angeordnet.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Ausführungsbeispiels eines Wicklungsstabes;
- Fig. 2: einen Querschnitt eines Wicklungsstabes gemäß der Schnittlinie II-II aus Fig. 1;
- Fig. 3: a) einen Aufriss eines Ausführungsbeispiels einer Fertigungsanlage zum Herstellen Wicklungsstäben;

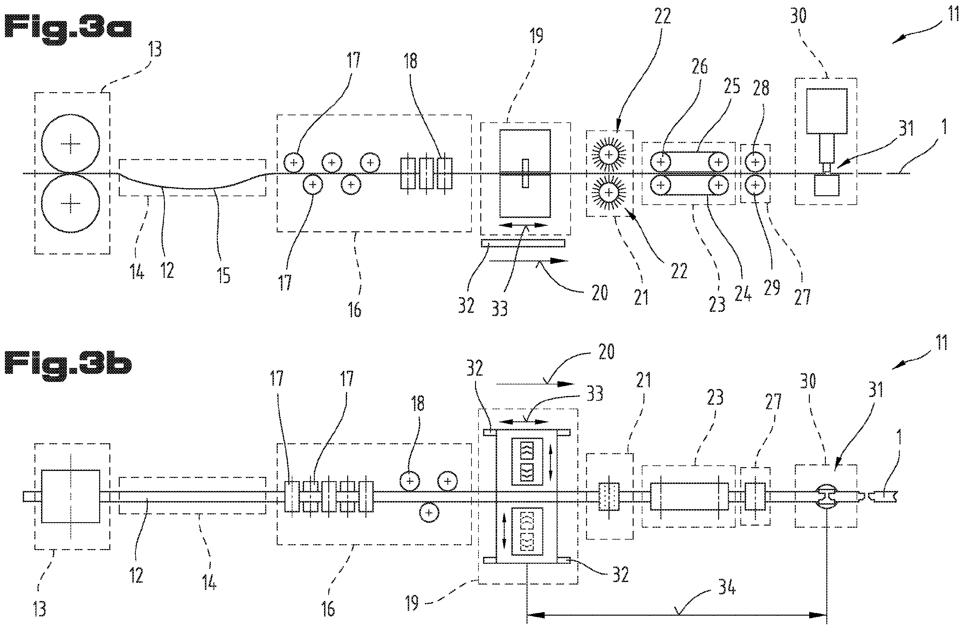

- Fig. 3: b) einen Grundriss eines Ausführungsbeispiels einer Fertigungsanlage zum Herstellen Wicklungsstäben;

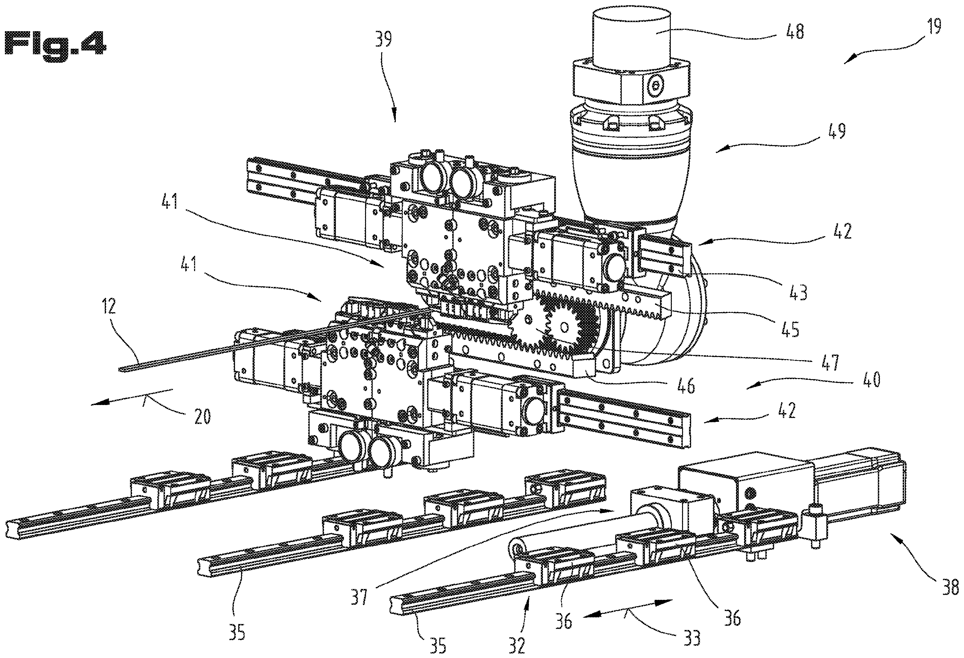

- Fig. 4: eine perspektivische Ansicht eines Ausführungsbeispiels einer Abisoliervorrichtung mit teilweise ausgeblendeten Bauteilen;

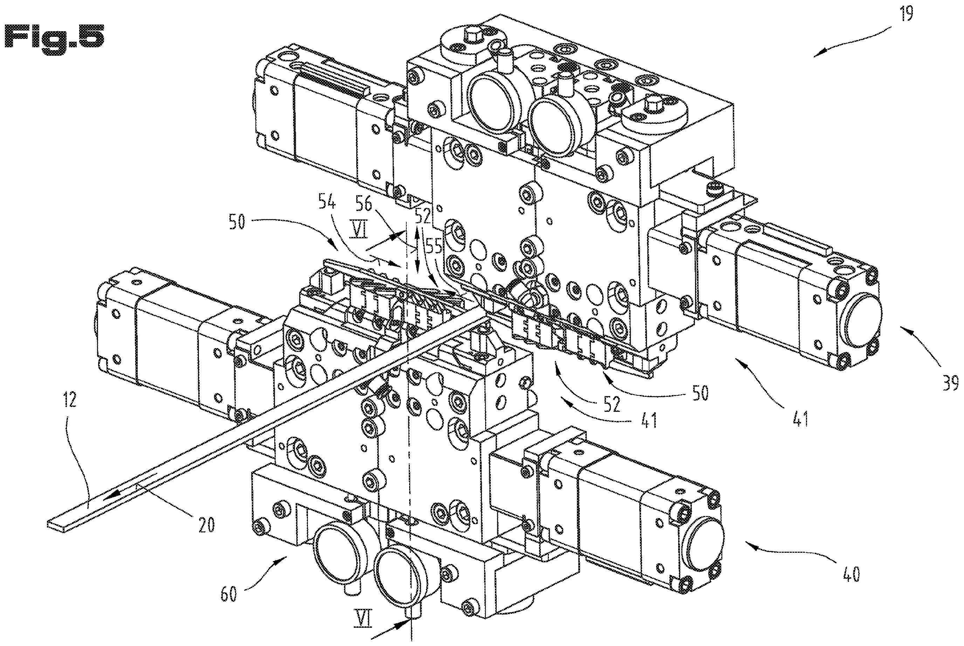

- Fig. 5: eine perspektivische Detailansicht der Abisoliervorrichtung mit teilweise ausgeblendeten Bauteilen;

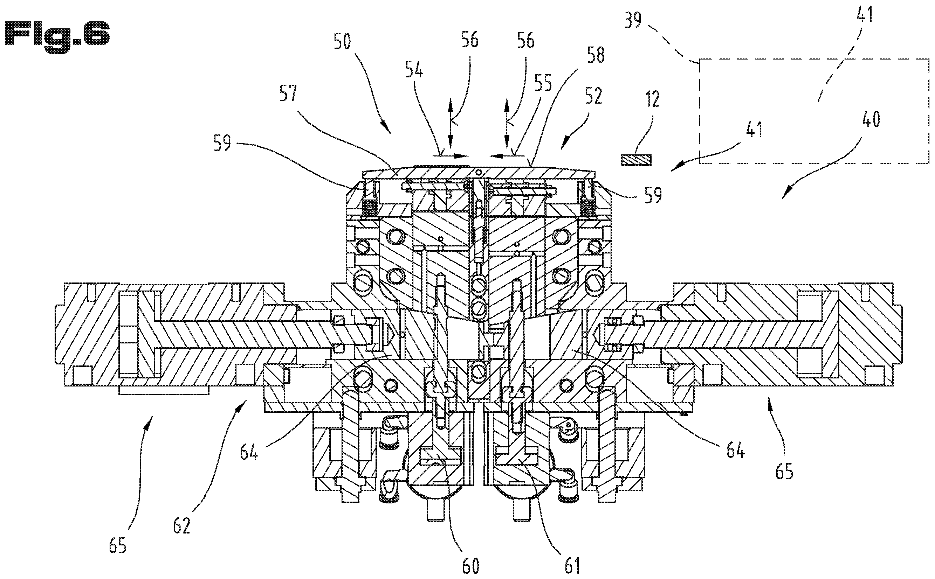

- Fig. 6: eine Schnittdarstellung der Abisoliervorrichtung;

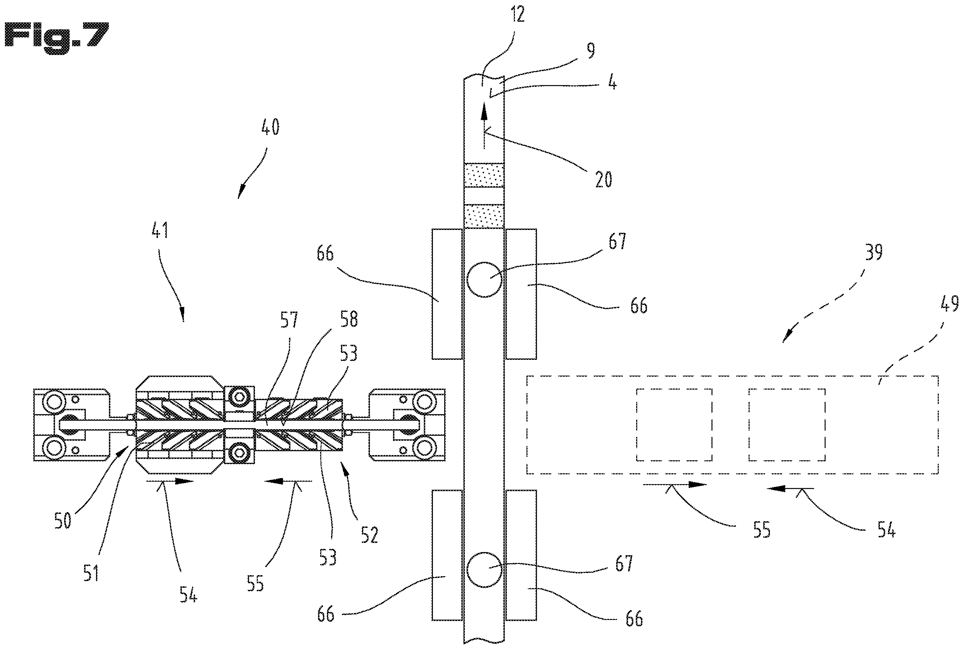

- Fig. 7: ein Grundriss eines Bearbeitungskopfes der Abisoliervorrichtung;

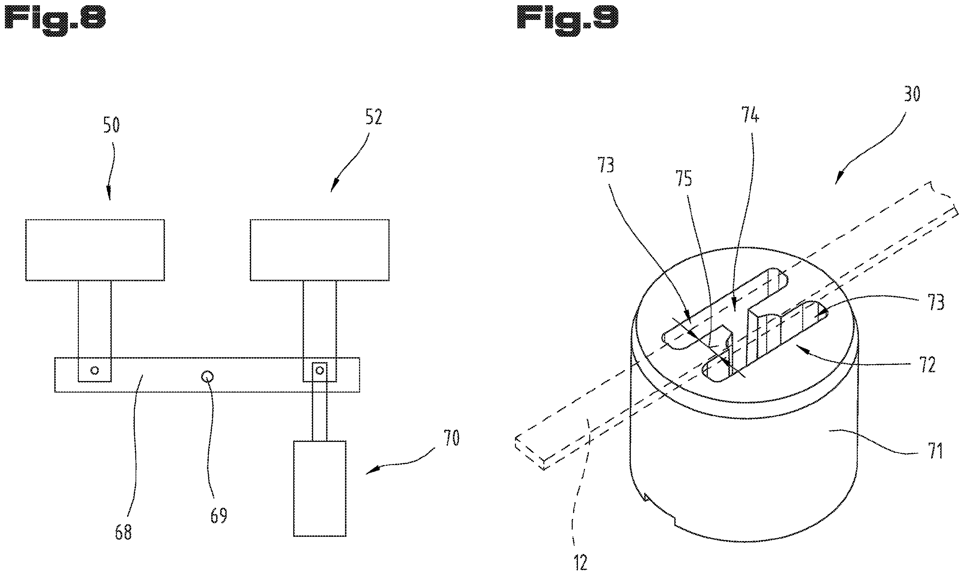

- Fig. 8: ein weiteres Ausführungsbeispiel des Mechanismus zum Aktivieren der Bearbeitungsköpfe;
- Fig. 9: eine schematische Darstellung eines Stanzwerkzeuges;

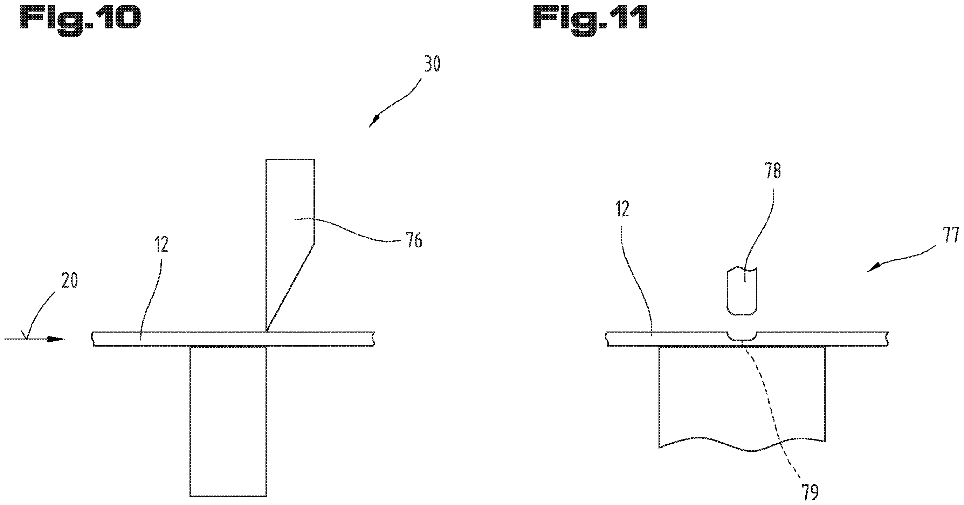

- Fig. 10: eine schematische Darstellung einer Schlagschere;
- Fig. 11: eine schematische Darstellung einer Prägevorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

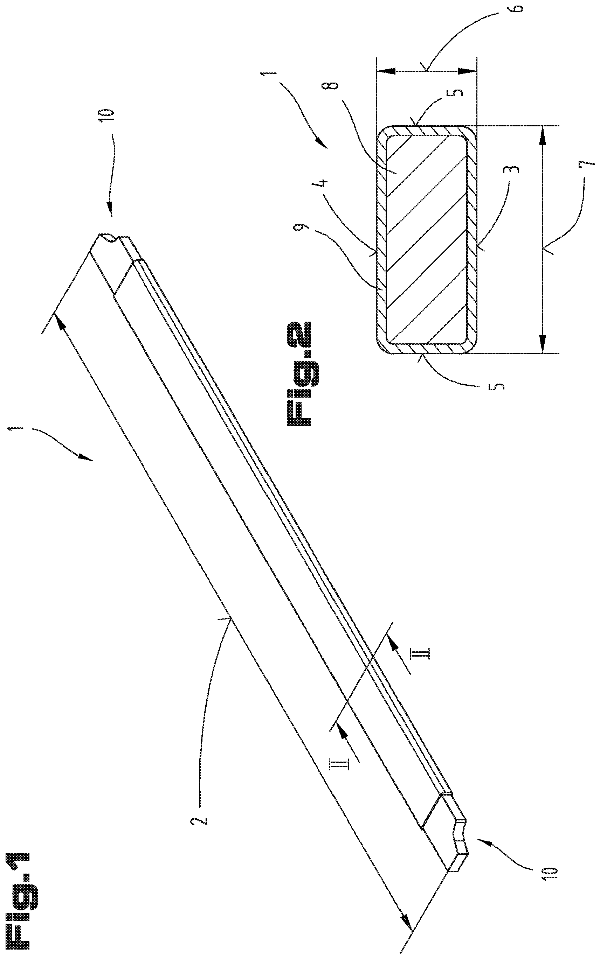

Fig. 1 zeigt eine perspektivische Ansicht eines Wicklungsstabes 1, welcher zum Herstellen einer Wicklung in einem Elektromotor verwendet wird. Die Verwendung des Wicklungsstabes 1 in einem Elektromotor ist in der DE 10 2015 217 922 A1 beschrieben. Der Wicklungsstab 1 weist eine Stablänge 2 auf, die je nach Größe des Elektromotors unterschiedlich gewählt sein kann. Insbesondere ist es auch denkbar, dass Wicklungsstäbe 1 für ein und denselben Elektromotor unterschiedliche Stablängen 2 aufweisen und somit auch während dem Fertigungsvorgang der Wicklungsstäbe 1 unterschiedliche Stablängen 2 gefertigt werden müssen.

In der Fig. 2 ist ein Querschnitt des Wicklungsstabes 1 gemäß der Schnittlinie II-II aus Fig. 1 dargestellt. Wie aus einer Zusammenschau der Figuren 1 und 2 ersichtlich, kann vorgesehen sein, dass der Wicklungsstab 1 einen rechteckigen Querschnitt aufweist. Es ist eine Grundfläche 3 und eine Deckfläche 4 ausgebildet, welche einander gegenüberliegend angeordnet sind. Außerdem sind zwei Seitenflächen 5 ausgebildet, welche ebenfalls einander gegenüberliegend angeordnet sind.

Der Wicklungsstab 1 weist eine Stabdicke 6 auf, welche durch den Abstand der Grundfläche 3 und der Deckfläche 4 zueinander festgelegt ist. Eine Stabbreite 7 des Wicklungsstabes 1 wird durch den Abstand der beiden Seitenflächen 5 zueinander definiert.

Wie besonders gut aus Fig. 2 ersichtlich, weist der Wicklungsstab 1 einen Kern 8 auf, welcher von einer Isolierschicht 9 umgeben ist. Der Kern 8 ist aus einem elektrisch leitfähigen Material, wie etwa Kupfer gebildet. Die Isolierschicht 9 ist beispielsweise in einem Tauchverfahren direkt auf den Kern 8 aufgebracht und umgibt diesen in einer konstanten Wandstärke.

Wie aus Fig. 1 gut ersichtlich, ist vorgesehen, dass an den beiden Längsenden 10 des Wicklungsstabes 1 die Isolierschicht 9 bereichsweise entfernt ist, sodass der Kern 8 des Wicklungsstabes 1 an der Oberfläche liegt.

In der Fig. 3 ist in schematischer Darstellung ein möglicher Aufbau eines Ausführungsbeispiels einer Fertigungsanlage 11 zum Herstellen eines Wicklungsstabes 1 aus einem Wicklungsstabrohling 12 gezeigt. Fig. 3a zeigt hierbei einen schematischen Aufriss der Fertigungsanlage 11 und Fig. 3b einen schematischen Grundriss der Fertigungsanlage 11.

Der Wicklungsstabrohling 12 weist ebenfalls den Kern 8 und die Isolierschicht 9 auf, wobei sich der Wicklungsstabrohling 12 über mehrere Stablängen 2 des Wicklungsstabes 1 erstreckt. Insbesondere kann vorgesehen sein, dass der Wicklungsstabrohling 12 eine Länge von bis zu mehreren tausend Stablängen 2 aufweist und auf einer Rohmaterialrolle aufgewickelt ist.

In einer alternativen Ausführungsvariante kann auch vorgesehen sein, dass der Wicklungsstabrohling 12 direkt in einer vorgelagerten Fertigungsanlage hergestellt wird und somit eine endlose Länge aufweist.

Wie aus Fig. 3 ersichtlich, kann vorgesehen sein, dass der Wicklungsstabrohling 12 mittels einer Zuführvorrichtung 13 der Fertigungsanlage 11 zugeführt wird. Die Zuführvorrichtung 13 kann hierbei eine Klemmrollenanordnung aufweisen.

Weiters kann vorgesehen sein, dass der Zuführvorrichtung 13 eine Pufferstrecke 14 nachgeschalten ist, in welcher der Wicklungsstabrohling 12 eine Materialschlaufe 15 bilden kann. Dadurch kann der Wicklungsstabrohling 12 in der Zuführvorrichtung 13 kontinuierlich zugeführt werden und in der restlichen Fertigungsanlage 11 getaktet weiterverarbeitet werden.

Der Pufferstrecke 14 kann eine Richtrollenanordnung 16 nachgeschalten sein, in welcher der Wicklungsstabrohling 12 geradegerichtet wird. Die Richtrollenanordnung 16 kann mehrere einander gegenüberliegende Höhenrichtrollen 17 aufweisen, welche jeweils auf die Grundfläche 3 bzw. auf die Deckfläche 4 des Wicklungsstabrohlings 12 einwirken. Darüber hinaus kann die Richtrollenanordnung 16 mehrere einander gegenüberliegende Breitenrichtrollen 18 aufweisen, welche auf die Seitenflächen 5 des Wicklungsstabrohlings 12 einwirken.

Der Richtrollenanordnung 16 kann eine Abisoliervorrichtung 19 nachgeschalten sein, welche zum teilweisen Entfernen der Isolierschicht 9 an der Grundfläche 3 und der Deckfläche 4 des Wicklungsstabrohlings 12 dient. Insbesondere ist vorgesehen, dass der Wicklungsstabrohling 12 in Produktionsrichtung 20 durch die Abisoliervorrichtung 19 geführt ist. Die Produktionsrichtung 20 liegt hierbei parallel zur Längserstreckung des Wicklungsstabrohlings 12.

Der Abisoliervorrichtung 19 nachgeordnet kann eine Reinigungsvorrichtung 21 vorgesehen sein, welche zum Entfernen von Verunreinigungen im abisolierten Bereich des Wicklungsstabrohlings 12 dient. Die Reinigungsvorrichtung 21 kann zwei einander gegenüberliegende Bürstrollen 22 aufweisen, welche auf die Grundfläche 3 bzw. auf die Deckfläche 4 des Wicklungsstabrohlings 12 wirken. Die Bürstrollen 22 können sich kontinuierlich drehen, wobei der Wicklungsstabrohling 12 zwischen den Bürstrollen 22 durchgezogen wird.

Weiters kann eine Vorschubvorrichtung 23 vorgesehen sein, welche zum getakteten Abzug des Wicklungsstabrohlings 12 aus der Abisoliervorrichtung 19 dient. Die Vorschubvorrichtung 23 kann ein erstes Klemmband 24 und ein zweites Klemmband 25 aufweisen, welche einander gegenüberliegend angeordnet sind und auf die Grundfläche 3 bzw. auf die Deckfläche 4 des Wicklungsstabrohlings 12 wirken. Die beiden Klemmbänder 24, 25 können jeweils durch Umlenkrollen 26 in Position gehalten werden, wobei einzelne der Umlenkrollen 26 gleichzeitig als Antriebsrolle dienen können.

Weiters kann vorgesehen sein, dass die beiden Klemmbänder 24, 25 aus einem Gummimaterial gebildet sind bzw. eine gummierte Oberfläche aufweisen, sodass eine gute Haftreibung zwischen dem Wicklungsstabrohling 12 und den Klemmbändern 24, 25 erreicht werden kann.

Weiters kann eine Messrollenanordnung 27 ausgebildet sein, welche zum Verifizieren des tatsächlichen Betrages der Positionsänderung des Wicklungsstabrohlings 12 während des Vorschubes dient. Die Messrollenanordnung 27 kann eine Messrolle 28 und eine Gegenhalterolle 29 aufweisen.

Weiters kann eine Ablängvorrichtung 30 ausgebildet sein, welche zum Ablängen des Wicklungsstabrohlings 12 zu einzelnen Wicklungsstäben 11 dient. Die Ablängvorrichtung 30 kann insbesondere ein Stanzwerkzeug 31 aufweisen, mittels welchem der eigentliche Ablängvorgang durchgeführt werden kann.

Wie aus Fig. 3 ersichtlich kann vorgesehen sein, dass die Reinigungsvorrichtung 21, die Vorschubvorrichtung 23 und die Messrollenanordnung 27 zwischen der Abisoliervorrichtung 19 und der Ablängvorrichtung 30 angeordnet sind. Die genaue Position dieser einzelnen Vorrichtungen bzw. deren Reihenfolge in Produktionsrichtung 20 kann variieren.

Wie aus Fig. 3 weiters ersichtlich kann vorgesehen sein, dass die Abisoliervorrichtung 19 an einer Linearführung 32 angeordnet ist, mittels welcher die Abisoliervorrichtung 19 in einer zur Produktionsrichtung 20 parallelen Verstellrichtung 33 verschiebbar ist. Durch Verschiebung der Abisoliervorrichtung 19 und/oder die Ablängvorrichtung 30 in Verstellrichtung 33 kann ein Abstand 34 zwischen der Abisoliervorrichtung 19 und der Ablängvorrichtung 30 variiert werden. Dadurch können an der Fertigungsanlage Wicklungsstäbe 1 mit unterschiedlichen Stablängen 2 gefertigt werden, wobei durch Variierung des Abstandes 34 immer gewährleistet ist, dass die Verfahrensschritte abisolieren und ablängen zeitgleich durchgeführt werden können.

In den Figuren 4 und 5 ist ein Ausführungsbeispiel der Abisoliervorrichtung 19 in einer perspektivischen Ansicht dargestellt. Zur besseren Übersichtlichkeit sind in der Fig. 4 einige Teile der Abisoliervorrichtung 19 nicht dargestellt und in der Fig. 5 sind weitere Teile ausgeblendet. Die weitere detaillierte Beschreibung der Abisoliervorrichtung 19 basiert auf einer Zusammenschau der Figuren 3, 4 und 5.

Wie aus Fig. 4 ersichtlich kann vorgesehen sein, dass die Linearführung 32 zur Verstellung der Abisoliervorrichtung 19 in Verstellrichtung 33 zumindest zwei Führungsschienen 35 aufweist, welche mit dem Untergrund gekoppelt sind. Weiters sind pro Führungsschiene 35 zumindest zwei Schlitten 36 vorgesehen, an welchen ein Maschinenrahmen der Abisoliervorrichtung 19 angeordnet ist. Zur besseren Übersichtlichkeit ist der Maschinenrahmen in der Fig. 4 nicht dargestellt. Dem Fachmann ist jedoch klar, dass der Maschinenrahmen zur Aufnahme bzw. zum Verbinden der einzelnen Bauteile dient und beispielsweise als Blechbiegeteil, als Schweißteil oder als Gussteil ausgeführt sein kann.

Weiters kann vorgesehen sein, dass eine Stellspindel 37 ausgebildet ist, welche mit einem Stellmotor 39 gekoppelt ist und zur Positionierung der Abisoliervorrichtung 19 in Verstellrichtung 33 dient.

Weiters sind ein oberer Werkzeugschlitten 39 und ein unterer Werkzeugschlitten 40 ausgebildet, an welchen jeweils ein Bearbeitungswerkzeug 41 zum Abisolieren des Wicklungsstabrohlings 12 angeordnet ist. Das Bearbeitungswerkzeug 41 des oberen Werkzeugschlittens 39 dient zum Abisolieren der Deckfläche 4 und das Bearbeitungswerkzeug 41 des unteren Werkzeugschlittens 40 dient zum Abisolieren der Grundfläche 3 des Wicklungsstabrohlings 12.

Die Werkzeugschlitten 39, 40 weisen jeweils eine Linearführung 42 auf, mittels welcher sie quer zur Vorschubrichtung 23 verstellbar sind. Die Linearführung 42 kann jeweils eine Führungsschiene 43 aufweisen, welche am nicht dargestellten Maschinenrahmen befestigt ist und einen an der Führungsschiene 43 geführten Schlitten 44, an welchem das Bearbeitungswerkzeug 41 aufgenommen ist.

Weiters kann vorgesehen sein, dass der obere Werkzeugschlitten 39 mit einer oberen Zahnstange 45 gekoppelt ist und dass der untere Werkzeugschlitten 40 mit einer unteren Zahnstange 46 gekoppelt ist. Die beiden Zahnstangen 45, 46 dienen zum Positionieren des Bearbeitungswerkzeuges 41. Weiters ist ein Zahnrad 47 vorgesehen, welches mit der oberen Zahnstange 45 und der unteren Zahnstange 46 gekoppelt ist. Das Zahnrad 47 wird von einem Antriebsmotor 48 angetrieben, welche in der Fig. 4 nur schematisch dargestellt ist. Wie aus Fig. 4 ersichtlich kann vorgesehen sein, dass der Antriebsmotor 48 mit einem Getriebe 49 gekoppelt ist, an welchem das Zahnrad 47 angeordnet ist.

Fig. 6 zeigt eine Schnittdarstellung des Bearbeitungswerkzeuges 41 gemäß der Schnittlinie VI-VI aus Fig. 5. In Fig. 6 ist nur das Bearbeitungswerkzeug 41 des unteren Werkzeugschlittens 40 dargestellt.

Fig. 7 zeigt eine Draufsicht auf das Bearbeitungswerkzeugs 41 des unteren Werkzeugschlittens 40, wobei das Bearbeitungswerkzeug 41 des oberen Werkzeugschlittens 39 in strichlierter Darstellung angedeutet ist.

Die genaue Funktion des Bearbeitungswerkzeuges 41 wird anhand einer Zusammenschau der Fig. 5, 6 und 7 beschrieben.

Da die Bearbeitungswerkzeuge 51 des oberen Werkzeugschlitten 39 und des unteren Werkzeugschlitten 40 im Wesentlichen gleich aufgebaut sind, wird der exakte Aufbau des Bearbeitungswerkzeuges 41 exemplarisch anhand des Bearbeitungswerkzeuges 41 des unteren Werkzeugschlittens 40 beschrieben.

Wie besonders gut aus den Figuren 5 und 7 ersichtlich, kann vorgesehen sein, dass das Bearbeitungswerkzeug 41 einen ersten Bearbeitungskopf 50 mit einer ersten Schneide 51 und einen zweiten Bearbeitungskopf 52 mit einer zweiten Schneide 53 aufweist.

Die erste Schneide 51 wirkt in einer ersten Bearbeitungsrichtung 54 und die zweite Schneide 53 wirkt in einer zweiten Bearbeitungsrichtung 55. Wie besonders gut aus Fig. 7 ersichtlich, kann vorgesehen sein, dass die Schneiden 51, 53 jeweils V-förmig ausgebildet sind.

Die beiden Bearbeitungsköpfe 50, 51 des Bearbeitungswerkzeuges 41 sind jeweils in Zustellrichtung 56 verstellbar. Dadurch ist wahlweise der erste Bearbeitungskopf 50 bzw. der zweite Bearbeitungskopf 52 aktivierbar. Die Zustellrichtung 56 ist orthogonal auf die Produktionsrichtung 20 und auf die Bearbeitungsrichtung 54, 55 der Schneiden 51, 53 angeordnet.

Mittig der Schneiden 51, 53 kann eine Niederhalteschiene 57 positioniert sein, welche eine Gleitoberfläche 58 aufweist.

Der Bearbeitungskopf 50, 52 ist dann aktiviert, wenn er in Zustellrichtung 56 so weit nach oben verschoben ist, dass die Schneiden 51, 53 über die Gleitoberfläche 58 der Niederhalteschiene 57 hinausragen. In der Darstellung der Fig. 6 ist beispielsweise der erste Bearbeitungskopf 50 aktiviert und der zweite Bearbeitungskopf 52 ist deaktiviert.

Wie aus Fig. 6 weiters ersichtlich kann vorgesehen sein, dass die Niederhalteschiene 57 in dessen Längsmitte gelenkig gelagert ist und an beiden Längsenden mittels einem federvorgespannten Stößel 59 in Position gehalten wird.

Weiters kann vorgesehen sein, dass der erste Bearbeitungskopf 50 mittels einem ersten Pneumatikzylinders 60 in Zustellrichtung 56 verschiebbar ist. Weiters kann vorgesehen sein, dass der zweite Bearbeitungskopf 52 mittels einem zweiten Pneumatikzylinders 61 in Zustellrichtung 56 verschiebbar ist. Dadurch sind die beiden Bearbeitungsköpfe 50, 52 selektiv aktivierbar bzw. deaktivierbar.

Weiters kann vorgesehen sein, dass für den ersten Bearbeitungskopf 50 eine erste Sperrvorrichtung 62 ausgebildet ist, welche zum Arretieren des ersten Bearbeitungskopfes 50 in seiner aktiven Stellung dient. Analog dazu kann vorgesehen sein, dass für den zweiten Bearbeitungskopf 52 eine zweite Sperrvorrichtung 63 ausgebildet ist. Die Sperrvorrichtungen 62, 63 können jeweils einen Sperrkeil 64 aufweisen, welcher unter den Bearbeitungskopf 50, 52 eingeschoben wird. Der Sperrkeil 64 kann mittels einem Pneumatikzylinder 65 verschoben werden.

Wie aus Fig. 7 ersichtlich kann darüber hinaus vorgesehen sein, dass Führungselemente 66 vorgesehen sind, welche zur seitlichen Führung des Wicklungsstabrohlings 12 dienen. Darüber hinaus kann eine Klemmvorrichtung 67 vorgesehen sein, welche dazu dient, um den Wicklungsstabrohling 12 während dem Abisolieren in seiner Position zu fixieren. Die Klemmvorrichtung 67 kann ebenfalls pneumatisch betätigt sein und auf die Deckfläche 4 des Wicklungsstabrohlings 12 wirken.

Im Folgenden wird der Verfahrensablauf zum Abisolieren des Wicklungsstabrohlings 12 beschrieben.

In einem ersten Verfahrensschritt wird der Wicklungsstabrohling 12 in Produktionsrichtung 20 positioniert, anschließend kann der Wicklungsstabrohling 12 mittels der Klemmvorrichtung 67 geklemmt werden. Parallel dazu kann der erste Bearbeitungskopf 50 des oberen Werkzeugschlittens 39 und auch der erste Bearbeitungskopf 50 des unteren Werkzeugschlittens 50 in Zustellrichtung 56 verschoben werden, sodass sich diese in einer Aktivstellung befinden. Die beiden zweiten Bearbeitungsköpfe 52 des oberen Werkzeugschlitten 39 und des unteren Werkzeugschlitten 40 werden zeitgleich außer Eingriff gebracht.

Anschließend können die ersten Bearbeitungsköpfe 50 der beiden Werkzeugschlitten 39, 40 mittels der Sperrvorrichtung 62 arretiert werden.

In einem anschließenden Verfahrensschritt werden die beiden Werkzeugschlitten 39, 40 jeweils in Bearbeitungsrichtung 54 der ersten Schneide bewegt und dadurch gegengleich über den Wicklungsstabrohling 12 gezogen. Der obere Werkzeugschlitten 39 bearbeitet hierbei die Deckfläche 4 des Wicklungsstabrohlings 12 und der untere Werkzeugschlitten 40 die Grundfläche 3 des Wicklungsstabrohlings 12. Hierbei kann, wie in Fig. 7 dargestellt, die Isolierschicht 9 am Wicklungsstabrohling 12 partiell abgetragen werden. Insbesondere kann vorgesehen sein, dass die Isolierschicht 9 im Bereich der Schneide 51 abgetragen wird und im Bereich der Niederhalteschiene 57 ein Steg stehenbleibt an welchem die Isolierschicht 9 nicht abgetragen ist. Währen dem Bearbeitungsvorgang wird der Wicklungsstabrohling 12 zusätzlich von den Niederhalteschienen 57 in seiner Position gehalten.

Anschließend können an beiden Werkzeugschlitten 39, 40 die zweiten Bearbeitungsköpfe 52 aktiviert werden und die ersten Bearbeitungsköpfe 50 deaktiviert werden. Parallel dazu kann der Wicklungsstabrohling 12 entsprechend der geforderten Stablänge 2 des herzustellenden Wicklungsstabes 1 in Produktionsrichtung 20 verschoben werden. Hierbei muss natürlich die Klemmvorrichtung 67 entsprechend gelöst und wieder geschlossen werden. Anschließend können die beiden Werkzeugschlitten 39, 40 in Bearbeitungsrichtung 55 der zweiten Schneide 53 wieder in ihre Ausgangsstellung verschoben werden, wobei hier ebenfalls ein Abisoliervorgang am Wicklungsstabrohling 12 durchgeführt wird. Nun kann der beschriebene Prozess von neuem gestartet werden.

Fig. 8 zeigt in schematischer Darstellung ein weiteres mögliches Ausführungsbeispiel eines Werkzeugschlittens 39, 40. Wie aus Fig. 8 ersichtlich kann vorgesehen sein, dass die beiden Bearbeitungsköpfe 50, 52 mittels einem Hebel 68 miteinander gekoppelt sind, welcher in einem mittig zwischen den beiden Bearbeitungsköpfen 50, 52 angeordneten Drehpunkt 69 gelagert ist. Bei einer derartigen Ausführung braucht nur ein einzelner Pneumatikzylinder 70 zum gleichzeitigen Verstellen beider Bearbeitungsköpfe 50, 52 gleichzeitig vorgesehen sein. Hierbei kann ebenfalls eine Sperrvorrichtung vorgesehen sein, welche zum Arretieren der Bearbeitungsköpfe 50, 52 dient.

Fig. 9 zeigt eine schematische Darstellung eines möglichen Ausführungsbeispiels einer Ablängvorrichtung 30.

Wie aus. Fig. 9 ersichtlich kann vorgesehen sein, dass die Ablängvorrichtung 30 ein Stanzwerkzeug aufweist. Das Stanzwerkzeug kann eine Matrize 71 umfassen, auf welcher der Wicklungsstabrohling 12 aufliegt. Die Matrize 71 wiest hierbei eine Ausnehmung 72 auf, welche in deren Form an einen nicht dargestellten Stempel angepasst ist.

Die Form der Ausnehmung 72 kann, wie aus Fig. 9 ersichtlich, H-förmig gewählt sein, sodass der Wicklungsstabrohling 12 in einzelne Wicklungsstäbe 1 unterteilt werden kann. Gleichzeitig können die Seitenflächen 5 an den Längsenden 10 des Wicklungsstabrohlings 12 abisoliert werden.

Insbesondere kann vorgesehen sein, dass die Ausnehmung 72 zwei parallel zueinander liegende Schenkel 73 aufweist, die mit einem Steg 74 miteinander verbunden sind. Die Schenkel 73 sind in einem Abstand 75 zueinander angeordnet.

Der Abstand 75 ist kleiner als die Stabbreite 7. Dadurch werden am Längsende 10 des Wicklungsstabes 1 beim Stanzvorgang auch gleichzeitig die Seitenflächen 5 abisoliert.

Weiters kann vorgesehen sein, dass der Stempel von einem Niederhalter umgeben ist, welcher mit dem Stempel bewegungsgekoppelt ist. Insbesondere kann vorgesehen sein, dass der Niederhalter mittels einem Federmechanismus am Stempel abgestützt ist.

In einer alternativen Ausführungsvariante gemäß Fig. 10 kann vorgesehen sein, dass die Ablängvorrichtung 30 in Form einer Schlagschere ausgebildet ist, wobei ein bewegliches Messer 76 ausgebildet ist, mittels welchem die einzelnen Wicklungsstäbe 1 abgetrennt werden können.

Fig. 11 zeigt eine schematische Darstellung eines möglichen Ausführungsbeispiels einer Prägevorrichtung 77 zum Einbringen einer Deformation, insbesondere einer Senke, in den Wicklungsstabrohling 12. Die Prägevorrichtung 77 kann einen Prägestempel 78 umfassen, welcher zum Einbringen der Deformation in den Wicklungsstabrohling 12 ausgebildet ist. Die Deformation kann genau in einem Bereich in den Wicklungsstabrohling 12 eingebracht werden, in dem der Wicklungsstabrohling 12 anschließend unterteilt wird, um einen einzelnen Wicklungsstab 1 zu erhalten. Diese Abtrennung ist anhand einer Trennlinie 79 dargestellt. Somit kann ein Wicklungsstab 1 hergestellt werden, welcher an dessen Längsende 10 eine Einkerbung aufweist.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Wicklungsstab | 31 | Stanzwerkzeug |
| 2 | Stablänge | 32 | Linearführung |
| 3 | Grundfläche | 33 | Verstellrichtung |
| 4 | Deckfläche | 34 | Abstand |
| 5 | Seitenfläche | 35 | Führungsschiene |
| 6 | Stabdicke | 36 | Schlitten |
| 7 | Stabbreite | 37 | Stellspindel |
| 8 | Kern | 38 | Stellmotor |
| 9 | Isolierschicht | 39 | oberer Werkzeugschlitten |
| 10 | Längsende | 40 | unterer Werkzeug schlitten |
| 11 | Fertigungsanlage | 41 | Bearbeitungswerkzeug |
| 12 | Wicklungsstabrohling | 42 | Linearführung Werkzeugschlitten |
| 13 | Zuführvorrichtung | 43 | Führungsschiene |
| 14 | Pufferstrecke | 44 | Schlitten |
| 15 | Materialschlaufe | 45 | obere Zahnstange |
| 16 | Richtrollenanordnung | 46 | untere Zahnstange |
| 17 | Höhenrichtrolle | 47 | Zahnrad |
| 18 | Breitenrichtrolle | 48 | Antriebsmotor |
| 19 | Abisoliervorrichtung | 49 | Getriebe |
| 20 | Produktionsrichtung | 50 | erster Bearbeitungskopf |
| 21 | Reinigungsvorrichtung | 51 | erste Schneide |
| 22 | Bürstrolle | 52 | zweiter Bearbeitungskopf |
| 23 | Vorschubvorrichtung | 53 | zweite Schneide |
| 24 | erstes Klemmband | 54 | Bearbeitungsrichtung erste Schneide |
| 25 | zweites Klemmband | | |
| 26 | Umlenkrolle | 55 | Bearbeitungsrichtung zweite Schneide |
| 27 | Messrollenanordnung | | |
| 28 | Messrolle | 56 | Zustellrichtung |
| 29 | Gegenhalterrolle | 57 | Niederhalterschiene |
| 30 | Ablängvorrichtung | 58 | Gleitoberfläche |
| 59 | Stößel | | |
| 60 | erster Pneumatikzylinder | | |
| 61 | zweiter Pneumatikzylinder | | |
| 62 | Sperrvorrichtung erster Bearbeitungskopf | | |
| 63 | Sperrvorrichtung zweiter Bearbeitungskopf | | |
| 64 | Sperrkeil | | |
| 65 | Pneumatikzylinder Sperrkeil | | |
| 66 | Führungselement | | |
| 67 | Klemmvorrichtung | | |
| 68 | Hebel | | |
| 69 | Drehpunkt | | |
| 70 | einzelner Pneumatikzylinder | | |
| 71 | Matrize | | |
| 72 | Ausnehmung | | |
| 73 | Schenkel | | |
| 74 | Steg | | |
| 75 | Abstand | | |
| 76 | bewegliches Messer | | |
| 77 | Prägevorrichtung | | |
| 78 | Prägestempel | | |
| 79 | Trennlinie | | |
| 80 | Walzanlage | | |
| 59 | Stößel | | |
| 60 | erster Pneumatikzylinder | | |
| 61 | zweiter Pneumatikzylinder | | |
| 62 | Sperrvorrichtung erster Bearbeitungskopf | | |
| 63 | Sperrvorrichtung zweiter Bearbeitungskopf | | |
| 64 | Sperrkeil | | |
| 65 | Pneumatikzylinder Sperrkeil | | |
| 66 | Führungselement | | |
| 67 | Klemmvorrichtung | | |
| 68 | Hebel | | |
| 69 | Drehpunkt | | |
| 70 | einzelner Pneumatikzylinder | | |
| 71 | Matrize | | |
| 72 | Ausnehmung | | |
| 73 | Schenkel | | |
| 74 | Steg | | |
| 75 | Abstand | | |
| 76 | bewegliches Messer | | |
| 77 | Prägevorrichtung | | |
| 78 | Prägestempel | | |
| 79 | Trennlinie | | |
| 80 | Walzanlage | | |

## Patentansprüche

1. Fertigungsanlage (11) zum Herstellen eines Wicklungsstabes (1) für einen Elektromotor, wobei die Fertigungsanlage (11) zum Verarbeiten eines Wicklungsstabrohlings (12) ausgebildet ist, welcher einen Kern (8) aus einem elektrisch leiten Material und eine den Kern (8) umhüllende Isolierschicht (9) aufweist, wobei der Wicklungsstabrohling (12) einen rechteckigen oder quadratischen Querschnitt mit einer Grundfläche (3) und einer Deckfläche (4) aufweist, welche einander gegenüberliegend angeordnet sind, die Fertigungsanlage (11) umfassend:
- eine Abisoliervorrichtung (19) welche zum teilweisen Entfernen der Isolierschicht (9) an der Grundfläche (3) und der Deckfläche (4) des Wicklungsstabrohlings (12) ausgebildet ist, wobei der Wicklungsstabrohling (12) in Produktionsrichtung (20) durch die Abisoliervorrichtung (19) führbar ist;
wobei
die Abisoliervorrichtung (19) ein Bearbeitungswerkzeug (41) zum mechanischen Abtrag der Isolierschicht (9) des Wicklungsstabrohlings (12) aufweist,
wobei eine Ablängvorrichtung (30) zum Ablängen des Wicklungsstabrohlings (12) ausgebildet ist, wobei die Ablängvorrichtung (30) der Abisoliervorrichtung (19) in Produktionsrichtung (20) nachgeschalten ist,
**dadurch gekennzeichnet, dass**
die Ablängvorrichtung (30) gleichzeitig zum Abisolieren von Teilbereichen von Seitenflächen (5) des Wicklungsstabrohlings (12) dient.

2. Fertigungsanlage nach Anspruch 1, **dadurch gekennzeichnet, dass** der Bearbeitungskopf (50, 52) des Bearbeitungswerkzeuges (41) der Abisoliervorrichtung (19) in Form eines Räumwerkzeuges ausgebildet ist, welches eine Bearbeitungsrichtung (54, 55) quer zur Produktionsrichtung (20) aufweist, wobei in Bearbeitungsrichtung (54, 55) wirkend zumindest eine Schneide (51, 53), insbesondere mehrere in Bearbeitungsrichtung (54, 55) hintereinander angeordnete Schneiden (51, 53), ausgebildet sind.

3. Fertigungsanlage nach Anspruch 2, **dadurch gekennzeichnet, dass** das Bearbeitungswerkzeug (41) der Abisoliervorrichtung (19) einen ersten Bearbeitungskopf (50) mit ersten Schneiden (51) aufweist und einen zweiten Bearbeitungskopf (52) mit zweiten Schneiden (53) aufweist, wobei die ersten Schneiden (51) und die zweiten Schneiden (53) eine gegensinnige Bearbeitungsrichtung (54, 55) aufweisen und wobei der erste Bearbeitungskopf (50) und der zweite Bearbeitungskopf (52) selektiv aktivierbar sind.

4. Fertigungsanlage nach Anspruch 3, **dadurch gekennzeichnet, dass** der erste Bearbeitungskopf (50) mit einem ersten Pneumatikzylinder (60) gekoppelt ist und der zweite Bearbeitungskopf (52) mit einem zweiten Pneumatikzylinder (61) gekoppelt ist, wobei die Bearbeitungsköpfe (50, 52) mittels den Pneumatikzylindern (60, 61) in einer Zustellrichtung (56) verschiebar sind und dadurch selektiv aktivierbar sind.

5. Fertigungsanlage nach einem der Ansprüche 1 bis 4, **dadurch gekennzeichnet, dass** die Schneiden (51, 53) V-Förmig ausgebildet sind.

6. Fertigungsanlage nach einem der Ansprüche 1 bis 5, **dadurch gekennzeichnet, dass** das Bearbeitungswerkzeug (41) eine Niederhalterschiene (57) aufweist, welche mittig der Schneiden (51, 53) angeordnet ist und eine Gleitoberfläche (58) aufweist.

7. Fertigungsanlage nach einem der vorhergehenden Ansprüche, **dadurch gekennzeichnet, dass** die Abisoliervorrichtung (19) einen oberen Werkzeugschlitten (39) zur Aufnahme eines oberen Bearbeitungswerkzeuges (41) und einen unteren Werkzeugschlitten (40) zur Aufnahme eines unteren Bearbeitungswerkzeuges (41) aufweist, wobei die beiden Werkzeugschlitten (39, 40) mittels einer Linearführung (42) quer zur Produktionsrichtung (20) geführt sind.

8. Fertigungsanlage nach Anspruch 7, **dadurch gekennzeichnet, dass** die Abisoliervorrichtung (19) einen Antriebsmotor (48) aufweist, der zum Antrieb des oberen Werkzeugschlittens (39) und des untern Werkzeugschlittens (40) dient, wobei der obere Werkzeugschlitten (39) eine obere Zahnstange (45) aufweist und der untere Werkzeugschlitten (40) eine untere Zahnstange (46) aufweist und wobei beide Zahnstangen (45, 46) mit einem Zahnrad (47) in Eingriff stehen, welches mit dem Antriebsmotor (48) drehgekoppelt ist, wobei die beiden Werkzeugschlitten (39, 40) derart mit dem Zahnrad (47) gekoppelt sind, dass bei Drehung des Zahnrades (47) die beiden Werkzeugschlitten (39, 40) in gegensinniger Richtung zueinander bewegt werden.

9. Fertigungsanlage nach einem der vorhergehenden Ansprüche, **dadurch gekennzeichnet, dass** eine Pufferstrecke (14) für den Wicklungsstabrohling (12) ausgebildet ist, wobei in Produktionsrichtung (20) gesehen die Pufferstrecke (14) der Abisoliervorrichtung (19) vorgeschalten ist.

10. Fertigungsanlage nach einem der vorhergehenden Ansprüche, **dadurch gekennzeichnet, dass** die Abisoliervorrichtung (19) und/oder die Ablängvorrichtung (30) an einer Linearführung (32) angeordnet ist, mittels welcher die Abisoliervorrichtung (19) und/oder die Ablängvorrichtung (30) in einer zur Produktionsrichtung (20) parallelen Verstellrichtung (33) verschiebbar ist.

11. Verfahren zum Herstellen eines Wicklungsstabes (1) für einen Elektromotor unter Verwendung einer Fertigungsanlage (11) nach einem der vorhergehenden Ansprüche, umfassend die Verfahrensschritte:
- Bereitstellen eines Wicklungsstabrohlings (12) mit einem Kern (8) aus einem elektrisch leiten Material und einer den Kern (8) umhüllenden Isolierschicht (9), wobei der Wicklungsstabrohling (12) einen rechteckigen oder quadratischen Querschnitt mit einer Grundfläche (3) und einer Deckfläche (4) aufweist, welche einander gegenüberliegend angeordnet sind;
- Zuführen des Wicklungsstabrohlings (12) zu einer Abisoliervorrichtung (19) in Produktionsrichtung (20);
- Entfernen eines Teilbereiches der Isolierschicht (9) an der Grundfläche (3) und der Deckfläche (4) des Wicklungsstabrohlings (12) mittels der Abisoliervorrichtung (19), wobei die Isolierschicht (9) durch mechanische Bearbeitung vom Wicklungsstabrohling (12) abgetragen wird; wobei
nach dem Entfernen eines Teilbereiches der Isolierschicht (9) die Produktionsschritte
- Zuführen des Wicklungsstabrohlings (12) zu einer Ablängvorrichtung (30);
- Ablängen des Wicklungsstabrohlings (12) an der Ablängvorrichtung (30) und damit Herstellen von Wicklungsstäben (1);
ausgeführt werden, **dadurch gekennzeichnet, dass**
die Ablängvorrichtung (30) gleichzeitig zum Abisolieren von Teilbereichen von Seitenflächen (5) des Wicklungsstabrohlings (12) dient.

12. Verfahren nach Anspruch 11, **dadurch gekennzeichnet, dass** der teilweise abisolierte Wicklungsstabrohling (12) mittels einer Vorschubvorrichtung (23) getaktet der Ablängvorrichtung (30) zugeführt wird, wobei der Ablängvorgang und der Abisoliervorgang zeitgleich durchgeführt werden.

13. Verfahren nach Anspruch 11 oder 12, **dadurch gekennzeichnet, dass** zum Herstellen von Wicklungsstäben (1) mit unterschiedlichen Stablängen (2) die Abisoliervorrichtung (19) in Produktionsrichtung (20) relativ zur Ablängvorrichtung (30) verstellt wird.

14. Verfahren nach einem der Ansprüche 11 bis 13, **dadurch gekennzeichnet, dass** der Wicklungsstabrohling (12) mittels einer Zuführvorrichtung (13) kontinuierlich der Fertigungsanlage (11) zugeführt wird und in einer Pufferstrecke (14), insbesondere in einer Materialschlaufe (15), zwischengespeichert wird, sodass der Wicklungsstabrohling (12) in der Abisoliervorrichtung (19) getaktet bearbeitet werden kann.

15. Verfahren nach einem der Ansprüche 11 bis 14, **dadurch gekennzeichnet, dass** der Wicklungsstabrohling (12) während dem Entfernen eines Teilbereiches der Isolierschicht (9) kontinuierlich in Produktionsrichtung (20) bewegt wird und die Abisoliervorrichtung (19) während dem Abisoliervorgang aufsynchronisiert mit dem Wicklungsstabrohling (12) in Produktionsrichtung (20) mitbewegt wird.

16. Verfahren nach einem der Ansprüche 11 bis 15, **dadurch gekennzeichnet, dass** der Wicklungsstabrohling (12) während dem Ablängen des Wicklungsstabrohlings (12) kontinuierlich in Produktionsrichtung (20) bewegt wird und die Ablängvorrichtung (30) während dem Ablängvorgang aufsynchronisiert mit dem Wicklungsstabrohling (12) in Produktionsrichtung (20) mitbewegt wird.

## Claims

1. A production plant (11) for producing a winding rod (1) for an electric motor, wherein the production plant (11) is configured for processing a winding rod blank (12), which has a core (8) made of an electrically conductive material and an insulating layer (9) enveloping the core (8), wherein the winding rod blank (12) has a rectangular or square cross-section with a base surface (3) and a top surface (4), which are arranged opposite one another, the production plant (11) comprising:
- a skinning device (19) formed for partially removing the insulating layer (9) on the base surface (3) and the top surface (4) of the winding rod blank (12), wherein the winding rod blank (12) can be guided through the skinning device (19) in the production direction (20);
wherein
the skinning device (19) has a processing tool (41) for mechanically removing the insulating layer (9) of the winding rod blank (12),
wherein a cutting device (30) for cutting the winding rod blank (12) to length is formed, wherein the cutting device (30) of the skinning device (19) is installed downstream in the production direction (20),
**characterized in that**
the cutting device (30) simultaneously serves to skin partial areas of side surfaces (5) of the winding rod blank (12).

2. The production plant according to claim 1, **characterized in that** the processing head (50, 52) of the processing tool (41) of the skinning device (19) is designed in the form of a broaching tool, which has a processing direction (54, 55) transverse to the production direction (20), wherein at least one cutting edge (51, 53), effective in the processing direction (54, 55), in particular multiple cutting edges (51, 53) arranged behind one another in the processing direction (54, 55), are formed.

3. The production plant according to claim 2, **characterized in that** the processing tool (41) of the skinning device (19) has a first processing head (50) with first cutting edges (51) and a second processing head (52) with second cutting edges (53), wherein the first cutting edges (51) and the second cutting edges (53) have a reverse processing direction (54, 55) and wherein the first processing head (50) and the second processing head (52) can be selectively activated.

4. The production plant according to claim 3, **characterized in that** the first processing head (50) is coupled to a first pneumatic cylinder (60), and the second processing head (52) is coupled to a second pneumatic cylinder (61), wherein the processing heads (50, 52) are displaceable in a feed direction (56) by means of the pneumatic cylinders (60, 61) and can thus be activated selectively.

5. The Production plant element according to one of claims 1 to 4, **characterized in that** the cutting edges (51, 53) are configured in V-shape.

6. The production plant according to one of claims 1 to 5, **characterized in that** the processing tool (41) has a downholder rail (57), which is arranged in the center of the cutting edges (51, 53) and has a sliding surface (58).

7. The production plant according to one of the preceding claims, **characterized in that** the skinning device (19) has an upper tool slide (39) for receiving an upper processing tool (41) and a lower tool slide (40) for receiving a lower processing tool (41), wherein the two tool slides (39, 40) are guided transversely to the production direction (20) by means of a linear guide (42).

8. The production plant according to claim 7, **characterized in that** the skinning device (19) has a drive motor (48) serving to drive the upper tool slide (39) and the lower tool slide (40), wherein the upper tool slide (39) has a n upper gear rack (45) and the lower tool slide (40) has a lower gear rack (46), and wherein both gear racks (45, 46) are engaged with a gear (47), which is rotationally coupled to the drive motor (48), wherein the two tool slides (39, 40) is coupled to the gear (47) such that, upon rotation of the gear (47), the two tool slides (39, 40) are moved in reverse directions relative to one another.

9. The production plant according to one of the preceding claims, **characterized in that** a buffer section (14) for the winding rod blank (12) is formed, wherein the buffer section (14) is upstream of the skinning device (19) when viewed in the production direction (20).

10. The production plant according to one of the preceding claims, **characterized in that** the skinning device (19) and/or the cutting device (30) is arranged on a linear guide (32), by means of which the skinning device (19) and/or the cutting device (30) is displaceable in a adjusting direction (33) parallel to the production direction (20).

11. A method for producing a winding rod (1) for an electric motor, using a production plant (11) according to one of the preceding claims, comprising the method steps:
- providing a winding rod blank (12) having a core (8) made of an electrically conductive material and an insulating layer (9) enveloping the core (8), wherein the winding rod blank (12) has a rectangular or square cross-section with a base surface (3) and a top surface (4), which are arranged opposite one another;
- feeding the winding rod blank (12) into a skinning device (19) in the production direction (20);
- removing a partial area of the insulating layer (9) on the base surface (3) and the top surface (4) of the winding rod blank (12) by means of the skinning device (19), wherein the insulating layer (9) is removed from the winding rod blank (12) by means of mechanical processing; wherein
after removing a partial area of the insulating layer (9), the production steps
- feeding the winding rod blank (12) into a cutting device (30);
- cutting the winding rod blank (12) to length at the cutting device (30) and thus producing winding rods (1);
are performed, **characterized in that**
the cutting device (30) simultaneously serves to skin partial areas of side surfaces (5) of the winding rod blank (12).

12. The method according to claim 11, **characterized in that** the partially skinned winding rod blank (12) is fed into the cutting device (30) in a timed manner by means of a feed device (23), wherein the cutting process and the skinning process are performed simultaneously.

13. The method according to claim 11 or 12, **characterized in that**, for producing winding rods (1) having different rod lengths (2), the skinning device (19) is adjusted in the production direction (20) relative to the cutting device (30).

14. The method according to one of claims 11 to 13, **characterized in that** the winding rod blank (12) is continuously fed to the production plant (11) by means of a feed device (13) and is stored temporarily in a buffer section (14), in particular in a material loop (15), so that the winding rod blank (12) can be processed in the skinning device (19) in a timed manner.

15. The method according to one of claims 11 to 14, **characterized in that** the winding rod blank (12) is continuously moved in the production direction (20) while a partial area of the insulating layer (9) is being removed, and the skinning device (19) is moved along with the winding rod blank (12) in the production direction (20) in a synchronized manner during the skinning process.

16. The method according to one of claims 11 to 15, **characterized in that** the winding rod blank (12) is continuously moved in the production direction (20) while the winding rod blank (12) is being cut to length, and the cutting device (30) is moved along with the winding rod blank (12) in the production direction (20) in a synchronized manner during the cutting process.

## Revendications

1. Installation de fabrication (11) pour la fabrication d'une tige d'enroulement (1) d'un moteur électrique, dans laquelle l'installation de fabrication (11) est conçue pour l'usinage d'une ébauche de tige d'enroulement (12), qui comprend un noyau (8) constitué d'un matériau électroconducteur et une couche isolante (9) entourant le noyau (8), dans laquelle l'ébauche de tige d'enroulement (12) présente une section transversale rectangulaire ou carrée avec une surface de base (3) et une surface de couverture (4) qui sont disposées en face l'une de l'autre, cette installation de fabrication (11) comprenant :
- un dispositif de dénudage (19) qui est conçu pour l'élimination partielle de la couche d'isolation (9) sur la surface de base (3) et de la surface de couverture (4) de l'ébauche de tige d'enroulement (12),
dans laquelle l'ébauche de tige d'enroulement (12) peut être guidée dans la direction de la production (20) à travers le dispositif de dénudage (19) ;
dans laquelle le dispositif de dénudage (19) comprend un outil d'usinage (41) pour l'enlèvement mécanique de la couche isolante (9) de l'ébauche de tige d'enroulement (12),
dans laquelle un dispositif de mise à longueur (30) est conçu pour la mise à longueur de l'ébauche de tige d'enroulement (12), dans laquelle le dispositif de mise à longueur (30) est disposée en aval du dispositif de dénudage (19) dans la direction de la production (20),
**caractérisée en ce que**
le dispositif de mise à longueur (30) permet également le dénudage de parties de surfaces latérales (5) de l'ébauche de tige d'enroulement (12).

2. Installation de fabrication selon la revendication 1, **caractérisée en ce que** la tête d'usinage (50, 52) de l'outil d'usinage (41) du dispositif de dénudage (19) se présente sous la forme d'un outil de brochage qui présente une direction d'usinage (54, 55) transversale par rapport à la direction de production (20), dans laquelle au moins une arête (51, 53), plus particulièrement plusieurs arêtes (51, 53), disposées les unes derrière les autres dans la direction d'usinage (54, 55), sont prévues, avec une action dans la direction d'usinage (54, 55).

3. Installation de fabrication selon la revendication 2, **caractérisée en ce que** l'outil d'usinage (41) du dispositif de dénudage (19) comprend une première tête d'usinage (50) avec des premières arêtes (51) et une deuxième tête d'usinage (52) avec des deuxièmes arêtes (53), dans laquelle les premières arêtes (51) et les deuxièmes arêtes (53) présente des directions d'usinage opposées (54, 55) et dans laquelle la première tête d'usinage (50) et la deuxième tête d'usinage (52) peuvent être activées de manière sélective.

4. Installation de fabrication selon la revendication 3, **caractérisée en ce que** la première tête d'usinage (50) est couplée avec un premier vérin pneumatique (60) et la deuxième tête d'usinage (52) est couplée avec un deuxième vérin pneumatique (61), dans laquelle les têtes d'usinage (50, 52) peuvent coulisser grâce aux vérins pneumatiques (60, 61) dans une direction d'approche (56) et peuvent être activées de manière sélective grâce à ceux-ci.

5. Installation de fabrication selon l'une des revendications 1 à 4, **caractérisée en ce que** les arêtes (51, 53) présentent une forme de V.

6. Installation de fabrication selon l'une des revendications 1 à 4, **caractérisée en ce que** l'outil d'usinage (41) comprend un rail de serre-flan (57) qui est disposé au centre entre les arêtes (51, 53) et présente une surface de glissement (58).

7. Installation de fabrication selon l'une des revendications précédentes, **caractérisée en ce que** le dispositif de dénudage (19) comprend une chariot d'outil supérieur (39) pour le logement d'un outil d'usinage supérieur (41) et un chariot d'outil inférieur (40) pour le logement d'un outil d'usinage inférieur (41), dans laquelle les deux chariots d'outils (39, 40) sont guidés au moyen d'un guidage linéaire (42) transversalement par rapport à la direction de production (20).

8. Installation de fabrication selon la revendication 7, **caractérisée en ce que** le dispositif de dénudage (19) comprend un moteur d'entraînement (48), qui permet l'entraînement du chariot d'outil supérieur (39) et du chariot d'outil inférieur (40), dans laquelle le chariot d'outil supérieur (39) comprend une crémaillère supérieure (45) et le chariot d'outil inférieur (40) comprend une crémaillère inférieure (46) et dans laquelle les deux crémaillères (45, 46) s'engrènent avec une roue dentée (47) qui est couplée en rotation avec le moteur d'entraînement (48), dans laquelle les deux chariots d'outils (39, 40) sont couplés avec la roue dentée (47) de façon à ce que, lors de la rotation de la roue dentée (47), les deux chariots d'outils (39, 40) soient déplacés dans des sens opposés entre eux.

9. Installation de fabrication selon l'une des revendications précédentes, **caractérisée en ce qu'**une section tampon (14) est formée pour l'ébauche de tige d'enroulement (12), dans laquelle, vue dans la direction de la production (20), la section tampon (14) est disposée en amont du dispositif de dénudage (19).

10. Installation de fabrication selon l'une des revendications précédentes, **caractérisée en ce que** le dispositif de dénudage (19) et/ou le dispositif de mise à longueur (30) est disposé sur un guidage linéaire (32), au moyen duquel le dispositif de dénudage (19) et/ou le dispositif de mise à longueur (30) peut coulisser dans une direction de déplacement (33) parallèle à la direction de la production (20).

11. Procédé de fabrication d'une tige d'enroulement (1) pour un moteur électrique à l'aide d'une installation de fabrication (11) selon l'une des revendications précédentes, comprenant les étapes suivantes :
- mise à disposition d'une ébauche de tige d'enroulement (12) avec un noyau (8) constitué d'un matériau électroconducteur et une couche isolante (9) entourant le noyau (8), dans laquelle l'ébauche de tige d'enroulement (12) présente une section transversale rectangulaire ou carrée avec une surface de base (3) et une surface de couverture (4), qui sont disposées en face l'une de l'autre ;
- avance de l'ébauche de tige d'enroulement (12) vers un dispositif de dénudage (19) dans la direction de production (20) ;
- élimination d'une partie de la couche isolante (9) sur la surface de base (3) et de la surface de couverture (4) de l'ébauche de tige d'enroulement (12) au moyen du dispositif de dénudage (19), dans laquelle la couche isolante (9) est enlevée par un usinage mécanique de l'ébauche de tige d'enroulement (12) ; dans laquelle, après l'élimination d'une partie de la couche isolante (9), les étapes de production
- avance de l'ébauche de tige d'enroulement (12) vers un dispositif de mise à longueur (30) ;
- mise à longueur de l'ébauche de tige d'enroulement (12) au niveau du dispositif de mise à longueur (30) et donc fabrication de tiges d'enroulement (1) ;
sont exécutées, **caractérisé en ce que**
le dispositif de mise à longueur (30) permet également le dénudage de parties des surfaces latérales (5) de l'ébauche de tige d'enroulement (12).

12. Procédé selon la revendication 11, **caractérisé en ce que** l'ébauche de tige d'enroulement (12) partiellement dénudée est avancée, au moyen d'un dispositif d'avance (23), de manière cadencée, vers le dispositif de mise à longueur (30), dans laquelle le processus de mise à longueur et le processus de dénudage sont exécutés simultanément.

13. Procédé selon la revendication 11 ou 12, **caractérisé en ce que**, pour la fabrication de tiges d'enroulement (1) avec différentes longueurs de tiges (2), le dispositif de dénudage (19) est déplacé dans la direction de production (20) par rapport au dispositif de mise à longueur (30).

14. Procédé selon l'une des revendications 11 à 13, **caractérisé en ce que** l'ébauche de tige d'enroulement (12) est introduite, au moyen d'un dispositif d'alimentation (13), de manière continue, dans l'installation de fabrication (11) et entreposée dans une section tampon (14), plus particulièrement dans une boucle de matériau (15), de façon à ce que l'ébauche de tige d'enroulement (12) puisse être usinée de manière cadencée dans le dispositif de dénudage (19).

15. Procédé selon l'une des revendications 11 à 14, **caractérisé en ce que** l'ébauche de tige d'enroulement (12) est déplacée, pendant l'élimination d'une partie de la couche isolante (9), de manière continue dans la direction de production (20) et le dispositif de dénudage (19) est déplacée, pendant le processus de dénudage, de manière synchrone avec l'ébauche de tige d'enroulement (12) dans la direction de production (20).

16. Procédé selon l'une des revendications 11 à 15, **caractérisé en ce que** l'ébauche de tige d'enroulement (12) est déplacée, pendant la mise à longueur de l'ébauche de tige d'enroulement (12), de manière continue dans la direction de production (20) et le dispositif de mise à longueur (30) est déplacé, pendant le processus de mise à longueur, de manière synchrone avec l'ébauche de tige d'enroulement (12) dans la direction de production (20).
